# EUROPEAN PATENT APPLICATION

(11) **EP 3 705 387 A1**
(43) Date of publication of application: **09.09.2020**
(21) Application number: 18873080.8
(22) Date of filing: 30.10.2018
(51) Int. Cl.: B62D 33/067, F16B 5/02

(54) **RESIN BRACKET**

(30) Priority: 31.10.2017 JP 2017210824
(71) Applicant: Mitsubishi Fuso Truck and Bus Corporation, Nakahara-ku, Kawasaki-shi Kanagawa 2118522 (JP)
(72) Inventor: AONO Noriaki, Kawasaki-shi Kanagawa 2118522 (JP); SANO Tokio, Ayase-shi Kanagawa 252-1125 (JP)
(74) Representative: advotec.
(86) International application number: PCT/JP2018/040351
(87) International publication number: WO 2019/088108

(57) **Abstract**

Provided are: a main body (45) made of resin; a fastening counterpart (51) formed integrally with the main body; a metal load-receiving member (43) having an embedded part (46) embedded in the main body, and a shaft part (47) extending from the embedded part; and a reinforcement part (53, 55) having a rib (54, 56) and provided in the main body.

## Description

### Technical Field

The present invention relates to a resin bracket, and particularly to a technique for improving strength and improving quality.

### Background Art

Conventionally, a cab suspension has been used to improve ride comfort for a cabin in which a crew of a truck boards. In this cab suspension, an air spring for absorbing shock of the cabin such as an air suspension is provided. Additionally, it is known to use a shock absorber to damp periodic vibration of a spring mass system generated by such an air spring (Patent Documents 1, 2).

### Prior Art Document

### Patent Document

Patent Document 1: Japanese Patent Laid-Open No. 7-137667
Patent Document 2: Japanese Patent Laid-Open No. 11-348819

### Summary of the Invention

### Problems to be solved by the Invention

For the cab suspension like the aforementioned Patent Documents 1, 2, a forged metal bracket is used to mount the shock absorber on a cab side. However, the forged bracket has a problem of requirement for machining, coating, and the like, and a high manufacturing cost.

From the above, a problem to be solved in this application is to provide a resin bracket capable of suppressing cost while securing quality.

### Means for Solving the Problems

A resin bracket according to this application example includes: a main body made of resin; a fastening counterpart formed integrally with the main body; a metal load-receiving member having an embedded part embedded in the main body, and a shaft part extending from the embedded part; and a reinforcement part having a rib and provided in the main body.

According to the resin bracket according to this application example, the reinforcement part having the rib is provided in the main body made of resin, so that the main body can form an inexpensive bracket having moderate toughness and rigidity. Consequently, it is possible to provide a resin bracket capable of suppressing cost while securing quality.

### Brief Description of the Drawings

FIG. 1 is a schematic configuration diagram of a truck mounted with a cab suspension.
FIG. 2 is a configuration diagram of the cab suspension.
FIG. 3 is a perspective view of a resin bracket according to the present invention.
FIG. 4 is a sectional view of a I-I cross section in FIG. 3.
FIG. 5 is a sectional view of a II-II cross section in FIG. 4.

### Mode for Carrying out the Invention

Hereinafter, an embodiment of the present invention will be described with reference to the drawings.

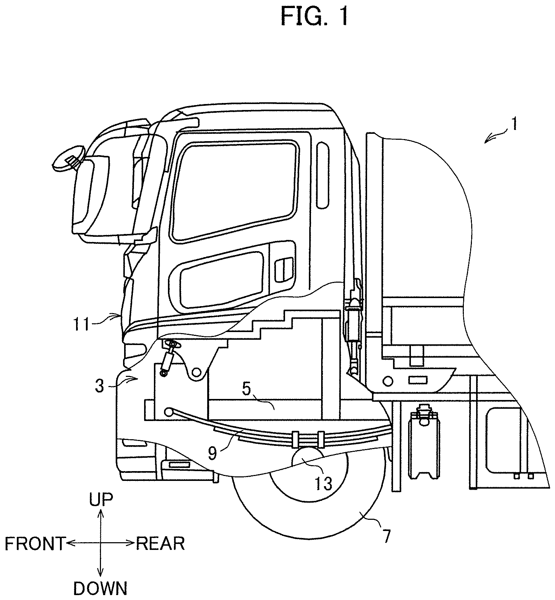

Referring to FIG. 1, a schematic configuration diagram of a truck 1 mounted with a cab suspension 3 is illustrated.

In a front part of the truck 1, a frame 5, wheels 7, and a cabin 11 are provided. A leaf spring 9 is disposed between the frame 5 and each wheel 7. Furthermore, cab suspensions 3 are disposed between the frame 5 and the cabin 11. Each leaf spring 9 is connected to a driving component 13 at a center in the front-rear direction, and is a suspension for absorbing vibration or shock transmitted from the wheel 7 to the frame 5. That is, the leaf spring 9 is disposed in order to suppress deterioration and damage of components mainly composing the truck 1, such as the driving component 13, the frame 5, and an engine (not illustrated), due to vibration or shock transmitted from the wheels 7.

The cab suspension 3 further absorbs vibration or shock transmitted from the wheels 7 to the cabin 11 with a configuration described below. That is, the cab suspensions 3 each are a suspension provided in order to mainly improve ride comfort of a crew who boards the cabin 11.

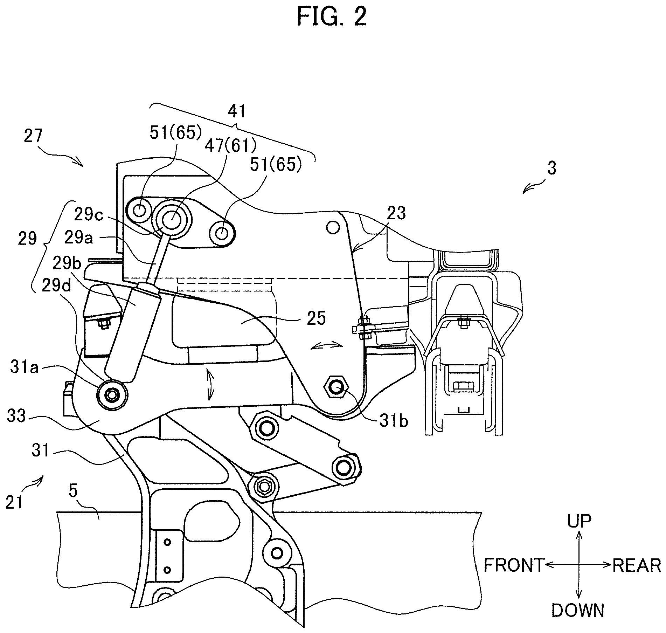

Referring to FIG. 2, a configuration diagram of the cab suspension 3 is illustrated.

The cab suspension 3 includes a cab hinge unit 21, a cab support member 23, an air spring 25, and a shock absorber unit 27. One end of an upper support member 33 rotates around a tilt fulcrum 31a, so that the cab hinge unit 21 can rotate (tilt) the cabin 11 provided above the upper support member 33. The cab support member 23 has one end connected to a suspension fulcrum 31b so as to be rotatable, and rotation of the other end is restricted by the air spring 25 and the shock absorber unit 27.

Specifically, the cab hinge unit 21 includes a lower support member 31 and the upper support member 33. The lower side in the vertical direction of the lower support member 31 is connected to the frame 5. The upper side of the lower support member 31 is connected to the upper support member 33 so as to be able to rotate the upper support member 33 at the tilt fulcrum 31a.

The upper support member 33 has the other end connected to the cab support member 23 so as to be able to rotate the cab support member 23 at the suspension fulcrum 31b.

The elastic modulus of the air spring 25 is kept constant by air supplied from an air compressor (not illustrated), and is a so-called constituting member of an air suspension that absorbs shock in the pressing direction or the tensile direction in which the shock is applied to the cabin 11.

In the shock absorber unit 27, a first fastening part 29d of a shock absorber 29 is fixed to the tilt fulcrum 31a. In the shock absorber unit 27, a second fastening part 29c is fixed to the cab support member 23 through a resin bracket 41 according to the present invention. This shock absorber 29 is an oil damper including a piston rod 29a and a cylinder 29b, and damps force in the piston moving direction, the force being applied to the shock absorber 29 by movement of a piston (not illustrated) connected to the piston rod 29a inside the cylinder 29b.

That is, in the cab support member 23, for example, when one end of the cab support member 23 is rotated around the suspension fulcrum 31b by vibration or shock generated by travelling of the truck 1, the other end of the cab support member 23 absorbs shock by the air spring 25. The air spring 25 has a constant elastic modulus, so that periodic vibration of a spring mass system generated in the cab support member 23 is damped by the shock absorber 29 of the shock absorber unit 27.

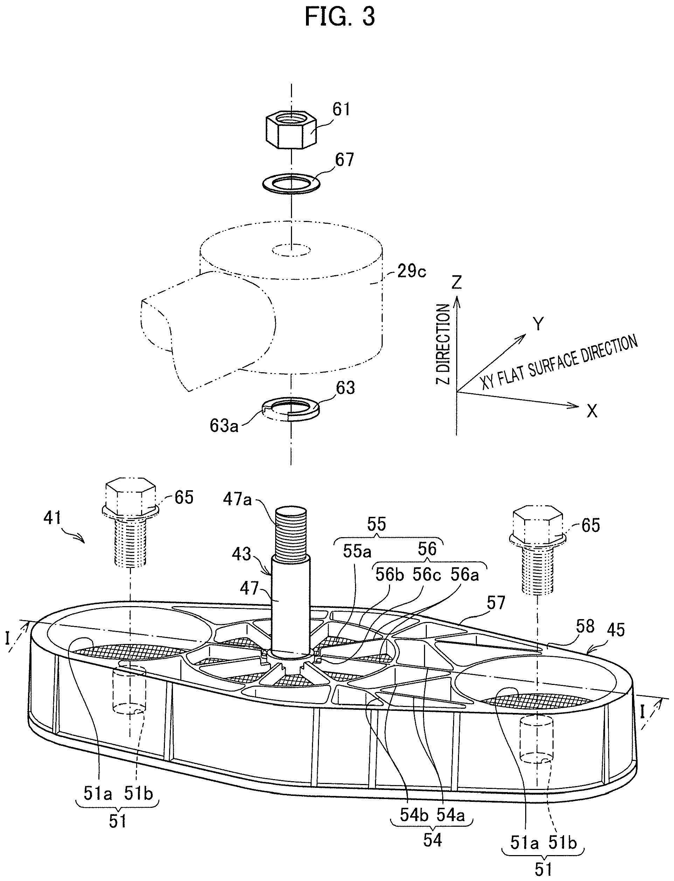

Referring to FIG. 3, a perspective view of the resin bracket 41 according to the present invention is illustrated. Fastening counterparts 51 described below are screwed to the cab support member 23 by bolts (fastening members) 65, so that the resin bracket 41 is assembled. Additionally, a cup washer 63, the second fastening part 29c of the shock absorber 29, and a flat washer 67 penetrate a shaft part 47 in the aforementioned order, and are screwed by a nut 61, so that the resin bracket 41 is assembled.

As illustrated in FIG. 2, when the cab support member 23 rotates to generate pressing force or tensile force in the shock absorber 29, force in the torsion direction is applied to the resin bracket 41, in addition to pressing force or tensile force in the predetermined direction. Specifically, when the cab support member 23 rotates with the suspension fulcrum 31b as a base point, the second fastening part 29c performs circular motion around the suspension fulcrum 31b. That is, the first fastening part 29d is fixed to the tilt fulcrum 31a, and the second fastening part 29c is fixed to the suspension fulcrum 31b, and therefore when the second fastening part 29c performs circular motion around the suspension fulcrum 31b, force in the torsion direction is applied to the first fastening part 29d and the second fastening part 29c.

In order to eliminate this torsion, in the second fastening part 29c and the first fastening part 29d, an elastic member such as rubber is provided on a peripheral edge of the second fastening part 29c. Consequently, when force in the torsion direction is applied to the second fastening part 29c, the elastic member is warped, so that it is possible to eliminate torsion to be applied to the second fastening part 29c and the first fastening part 29d.

At this time, torsional stress is applied to a load-receiving member 43, described below, which fixes the resin bracket 41 and the shock absorber 29. Therefore, the resin bracket 41 needs to have a configuration capable of withstanding torsional stress, pressing force, and tensile force to be applied to the load-receiving member 43.

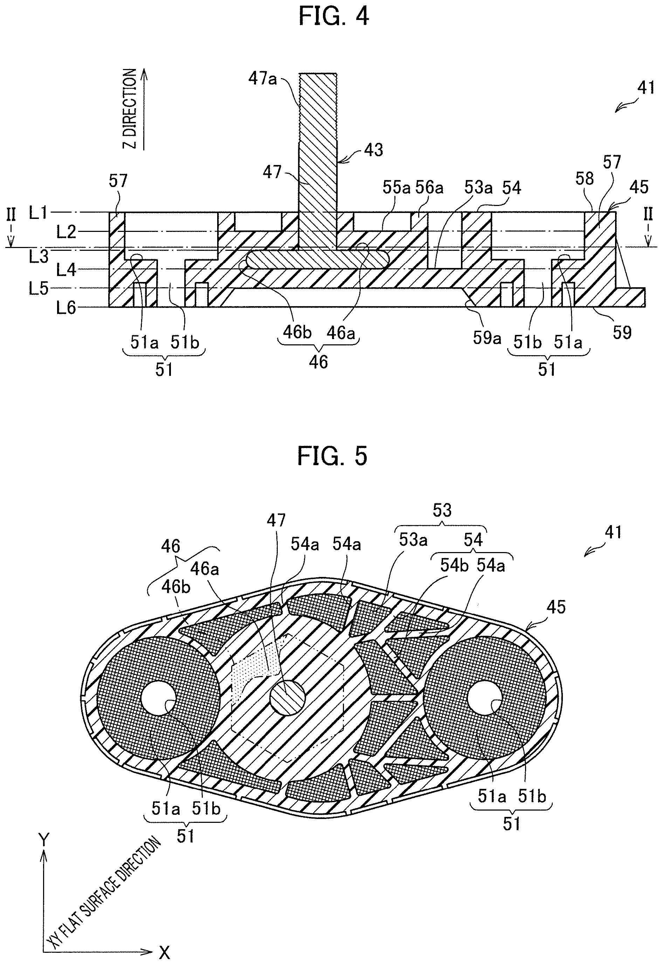

Referring to FIG. 4, a sectional view of a I-I cross section in FIG. 3 is illustrated. Referring to FIG. 5, a sectional view of a II-II cross section in FIG. 4 is illustrated. Hereinafter, the resin bracket 41 will be described in detail with reference to FIG. 3 to FIG. 5.

The resin bracket 41 includes the load-receiving member 43 and a resin member (main body) 45. The load-receiving member 43 is a forged metal member including a flange part (embedded part) 46 and the shaft part 47. The flange part 46 is a flat plate member in which a peripheral edge 46b of a flat surface 46a has a hexagonal shape.

The shaft part 47 extends from the center of the flat surface 46a of the flange part 46 in the direction perpendicular to the flat surface 46a. A screw part 47a enabling screwing by the nut 61 is formed on a peripheral surface of an end of the shaft part 47, the end being separated from the flange part 46.

The resin member 45 is a resin member including the fastening counterparts 51, an outer reinforcement part 53, an inner reinforcement part 55, and an outer edge rib part 57.

Specifically, for example, the resin member 45 is so-called fiber reinforced plastic (LEONA 14G manufactured by Asahi Kasei Corporation) formed by using PA66-GF containing glass fiber. The aforementioned resin only needs to contain 30% to 50% glass fiber.

In the resin member 45, the flange part 46 of the load-receiving member 43 is formed so as to be embedded in a part deeper than a bottom surface 55a of the inner reinforcement part 55 by insert molding. The flat surface 46a and the peripheral edge 46b are covered with resin, so that the flange part 46 thus embedded is supported in the direction in which the flange part 46 rotates around the shaft part 47.

That is, when the load-receiving member 43 is twisted in the direction of rotation around the shaft part 47, the peripheral edge 46b is supported by the resin member 45, so that it is possible to prevent rotation around the shaft part 47. Particularly, the peripheral edge 46b has a hexagonal shape, so that the peripheral edge 46b can be firmly supported by the resin member 45.

The fastening counterparts 51 are formed so as to have bearing surfaces 51a and openings 51b, and are provided on both ends of the resin member 45. Each bearing surface 51a is a circular surface located in the direction opposite to a Z direction from a front surface 58, and parallel to the front surface 58. Each opening 51b is a through hole that penetrates from the center of the bearing surface 51a toward a back surface 59.

The inner reinforcement part 55, and the outer reinforcement part 53 provided around the inner reinforcement part 55 include bottom surfaces 53a, 55a, and ribs 54, 56, respectively. The bottom surfaces 53a, 55a are surfaces that are parallel to the front surface 58, and that are formed to be located in order of the bottom surface 55a and the bottom surface 53a in the direction opposite to the Z direction of the load-receiving member 43 as viewed from the front surface 58. For convenience of explanation, the front surface 58 is defined as a first surface L1, the remaining surfaces are classified into a second surface L2 to a fifth surface L5 in the direction opposite to the Z direction. When the back surface 59 is defined as a sixth surface L6, the bottom surface 55a and the bottom surface 53a are formed so as to be located at the second surface L2 and a fourth surface L4, respectively.

In the back surface 59, a recess 59a recessed from the sixth surface L6 toward the fifth surface L5 is provided at a position corresponding to the outer reinforcement part 53 and the inner reinforcement part 55. Furthermore, the flange part 46 is embedded at a position corresponding to the inner reinforcement part 55 between a third surface L3 and the fourth surface L4, and the thickness in the Z direction between the second surface L2 and the third surface L3 is the same as the thickness between the fourth surface L4 and the fifth surface L5.

That is, the thickness in the Z direction of resin provided between the respective surfaces forming the bottom surfaces 53a, 55a is uniform, and therefore rigidity and toughness are unified, and stress is distributed.

The ribs 54, 56 are wall-shaped portions extending in the Z direction from the bottom surfaces 53a, 55a, respectively. Specifically, the rib 56 includes a circular rib 56b concentric with the shaft part 47, and radial ribs 56a radially extending from the shaft part 47. Particularly, grooves 56c are provided at portions near the shaft part 47 of the radial ribs 56a, so that a protrusion 63a of the cup washer 63 can be prevented from interfering with the radial ribs 56a. The rib 54 reaches the outer edge rib part 57 forming an outer edge of the resin member 45 from the circular rib 56b. This rib 54 includes trunk ribs (radial ribs) 54a radially extending from the shaft part 47, and branch ribs 54b that reach the outer edge rib part 57 from the trunk ribs 54a.

That is, the radial ribs 56a and the trunk ribs 54a extending radially as viewed from the shaft part 47 are provided in the resin member 45, so that the load-receiving member 43 is reinforced in the direction parallel to the front surface 58 (for convenience of explanation, the direction is hereinafter referred to as an XY flat surface direction). Particularly, the branch ribs 54b reach the outer edge rib part 57 from the trunk ribs 54a, so that the trunk ribs 54a are reinforced with respect to the direction of rotation around a Z-axis. Additionally, the circular rib 56b is provided in the resin member 45, so that the load-receiving member 43 is reinforced with respect to the direction of rotation around the Z-axis.

Furthermore, the outer reinforcement part 53 and the inner reinforcement part 55 have spaces from the front surface 58 to the bottom surfaces 53a, 55a, respectively, and the load-receiving member 43 is made of resin, so that the resin member 45 is reinforced by the ribs 54, 56 having predetermined flexibility. Thus, in the outer reinforcement part 53 and the inner reinforcement part 55 that reinforce the resin member 45, the ribs 54, 56 warp toward the spaces when the load-receiving member 43 is pressed in the XY flat surface direction, or twisted in the direction of rotation around the Z-axis. Consequently, it is possible to distribute stress to be applied to each of the ribs 54, 56.

With such a configuration, in the resin bracket 41 according to the present invention, even in a case where the resin member 45 as the main body is made of resin which is low in material cost and processing cost such as for machining, and torsional stress, pressing force, and tensile force are applied to the load-receiving member 43 by vibration or shock generated by travelling or the like of the truck 1, it is possible to fix the second fastening part 29c of the shock absorber 29 to the cab support member 23 without damage (secure quality).

As described above, the resin bracket according to the present invention includes the resin member 45 made of resin, the fastening counterparts 51 integrally formed with the resin member 45, the metal load-receiving member 43 including the flange part 46 embedded in the resin member 45 and the shaft part 47 extending from the flange part 46, and the outer reinforcement part 53 and the inner reinforcement part 55 as the reinforcement part, having the ribs 54, 56 and provided in the resin member 45.

Accordingly, the outer reinforcement part 53 and the inner reinforcement part 55 having the ribs 54, 56, respectively are provided in the resin member 45 made of resin, so that the resin member 45 can have moderate toughness and rigidity. For example, the trunk ribs 54a and the radial ribs 56a that reach in the direction of force applied to the load-receiving member 43 embedded in the resin member 45 are disposed, so that the load-receiving member 43 can be supported while the trunk ribs 54a and the radial ribs 56a made of the same resin as the resin member 45 moderately warp such that the resin member 45 is not damaged. Furthermore, the resin member 45 is of resin, and therefore corrosion resistance can be enhanced, and rust-proofing such as coating is not required. Furthermore, the resin member 45 as the main body is of resin, and therefore it is possible to reduce size without considering strength in case of corrosion due to rust or the like. Particularly, the resin member 45 is made of resin, and therefore it is possible to reduce weight and cost compared to a case where a bracket made of metal is formed, for example. With such a configuration, the load-receiving member 43 made of metal is firmly provided in the resin member 45 made of resin, and it is possible to enhance corrosion resistance without so-called post-treatment such as surface treatment, and form a lightweight and inexpensive bracket.

The reinforcement part includes the inner reinforcement part 55 in contact with the shaft part 47, and the outer reinforcement part 53 provided around the inner reinforcement part 55, and the height of the rib 56 of the inner reinforcement part 55 in the Z direction from the bottom surface 55a is lower than the height of the rib 54 of the outer reinforcement part 53.

Accordingly, the height of the rib 56 of the inner reinforcement part 55 on which force to be applied to the load-receiving member 43 is concentrated is reduced, so that it is possible to enhance the rigidity of the resin member 45 in the vicinity of the load-receiving member 43. On the other hand, the height of the rib 56 of the outer reinforcement part 53 is increased, so that it is possible to enhance the toughness of the outer reinforcement part 53.

Thus, while the rigidity of the inner reinforcement part 55 is enhanced, the toughness of the outer reinforcement part 53 is enhanced, so that the resin member 45 supporting the load-receiving member 43 is reinforced by the inner reinforcement part 55, the inner reinforcement part 55 having enhanced rigidity is provided, the outer reinforcement part 53 having enhanced toughness of the resin member 45 near the inner reinforcement part 55 is provided around the inner reinforcement part 55, and the resin member 45 can be formed so as to moderately have the rigidity and the toughness as the whole of the resin member 45.

The resin constituting the resin member 45 contains 30% to 50% glass fiber.

Accordingly, the resin member 45 can maintain the toughness by flexibility as resin while enhancing the rigidity.

Particularly, the load-receiving member 43 supports the shock absorber 29 provided at such a position as not to be exposed to high-temperature heat of an engine and the like, and therefore it is possible to support a member to which shearing stress and torsional stress by pressing or tension are applied on a fastening portion.

The description of the resin bracket according to the present invention will be finished. The present invention is not limited to the aforementioned embodiment, and can be changed without departing from the spirit of the invention.

For example, in this embodiment, the resin bracket 41 is provided in order to support the shock absorber 29 provided in the cab suspension 3 of the truck 1. However, the resin bracket may be provided in order to support a shock absorber for a two-wheeled vehicle or the like, or may be used for a real estate such as a house.

In this embodiment, the resin member 45 is formed of PA66-GF50 containing 50% glass fiber. However, the present invention is not limited to this, and any resin having strength may be used.

### <Aspects of Present Invention>

A resin bracket according to a first aspect of the present invention includes: a main body made of resin; a fastening counterpart formed integrally with the main body; a metal load-receiving member having an embedded part embedded in the main body, and a shaft part extending from the embedded part; and a reinforcement part having a rib and provided in the main body.

In the resin bracket according to the first aspect of the present invention, the reinforcement part having the rib is provided in the main body made of resin, and therefore the main body can have moderate toughness and rigidity. For example, the rib extending in the direction of force applied to the load-receiving member embedded in the main body is disposed, so that the load-receiving member can be reinforced while the rib made of resin moderately warp such that the main body made of resin is not damaged. Furthermore, the main body is of resin, and therefore corrosion resistance can be enhanced, and rust-proofing such as coating is not required. Furthermore, the main body is of resin, and therefore it is possible to reduce size without considering strength in case of corrosion due to rust or the like. Particularly, the main body is made of resin, and therefore it is possible to reduce weight and cost compared to a case where a bracket made of metal is formed, for example. With such a configuration, the load-receiving member made of metal is firmly provided in the main body made of resin, and it is possible to enhance corrosion resistance without so-called post-treatment such as surface treatment, and form a lightweight and inexpensive bracket.

From the above, in the first aspect, it is possible to provide a resin bracket capable of suppressing cost while securing quality.

According to a resin bracket according to a second aspect of the present invention, in the aforementioned first aspect, the reinforcement part is provided with a plurality of the ribs. Consequently, it is possible to distribute force to be applied to one rib, and prevent stress concentration.

According to a resin bracket according to a third aspect of the present invention, in the aforementioned second aspect, the reinforcement part is provided with a bottom surface between the ribs, and the ribs have different heights from the bottom surface in a direction in which the shaft part extends. Consequently, rigidity and toughness can be adjusted by the heights of the ribs.

According to a resin bracket according to a fourth aspect of the present invention, in the aforementioned third aspect, the reinforcement part includes an inner reinforcement part in contact with the shaft part, and an outer reinforcement part provided around the inner reinforcement part, and the height of the rib of the inner reinforcement part from the bottom surface in the direction in which the shaft part extends is lower than the height of the rib of the outer reinforcement part. Consequently, the height of the rib of the inner reinforcement part on which force to be applied to the load-receiving member is concentrated is reduced, so that it is possible to enhance the rigidity of the main body near the load-receiving member. On the other hand, the height of the rib of the outer reinforcement part is increased, so that it is possible to enhance the toughness of the outer reinforcement part.

According to a resin bracket according to a fifth aspect of the present invention, in the aforementioned third or fourth aspect, resin forming the bottom surface in the main body has a uniform thickness in the direction in which the shaft part extends. Consequently, the thickness of the resin forming the bottom surface is uniformed, rigidity or toughness of the resin forming the bottom surface is unified, and stress concentration on a part of the resin forming the bottom surface is suppressed.

According to a resin bracket according to a sixth aspect of the present invention, in any of the aforementioned first to fifth aspects, the reinforcement part has a circular rib having a circular shape and surrounding the load-receiving member. Consequently, the load-receiving member is reinforced with respect to the direction of rotation around the shaft part.

According to a resin bracket according to a seventh aspect of the present invention, in any of the aforementioned first to sixth aspects, the reinforcement part has a radial rib radially extending from the load-receiving member. Consequently, the load-receiving member is reinforced in the direction along the radial rib from the load-receiving member.

According to a resin bracket according to an eighth aspect of the present invention, in the aforementioned seventh aspect, the reinforcement part further has a branch rib branched from the radial rib. Consequently, the radial rib is reinforced with respect to the direction of rotation around the shaft part.

According to a resin bracket according to a ninth aspect of the present invention, in any of the aforementioned first to eighth aspects, the resin constituting the main body contains 30% to 50% glass fiber. Consequently, the main body can maintain the toughness by flexibility as resin while enhancing the rigidity.

According to a resin bracket according to a tenth aspect of the present invention, in any of the aforementioned first to ninth aspects, the shaft part is provided with a screw part on a circumferential surface thereof. Consequently, a penetrated member that penetrates the shaft part to be connected can be screwed by providing a nut on the screw part, and the penetrated member can be firmly fastened to the shaft part.

According to a resin bracket according to an eleventh aspect of the present invention, in any of the aforementioned first to tenth aspects, the load-receiving member is mounted on a shock absorber of a cab suspension, and supports the shock absorber. Consequently, the load-receiving member supports the shock absorber provided at such a position as not to be exposed to high-temperature heat of an engine and the like, so that the main body made of resin can be made not to be exposed to high-temperature heat. Additionally, the main body can support a member to which shearing stress and torsional stress by pressing or tension are applied on a fastening portion such as a shock absorber of the cab suspension through the shaft part.

### Explanation of Reference Signs

- 3: cab suspension
- 29: shock absorber
- 41: resin bracket
- 43: load-receiving member
- 45: resin member (main body)
- 46: flange part (embedded part)
- 47: shaft part
- 47a: screw part
- 51: fastening counterpart
- 51a: bearing surface
- 51b: opening
- 53: outer reinforcement part
- 53a, 55a: bottom surface
- 54, 56: rib
- 54a: trunk rib (radial rib)
- 54b: branch rib
- 55: inner reinforcement part
- 56a: radial rib
- 56b: circular rib
- 65: bolt (fastening member)

## Claims

1. A resin bracket comprising:
a main body made of resin;
a fastening counterpart formed integrally with the main body;
a metal load-receiving member having an embedded part embedded in the main body, and a shaft part extending from the embedded part; and
a reinforcement part having a rib and provided in the main body.

2. The resin bracket according to claim 1, wherein
the reinforcement part is provided with a plurality of the ribs.

3. The resin bracket according to claim 2, wherein
the reinforcement part is provided with a bottom surface between the ribs, and
the ribs have different heights from the bottom surface in a direction in which the shaft part extends.

4. The resin bracket according to claim 3, wherein
the reinforcement part includes an inner reinforcement part in contact with the shaft part, and an outer reinforcement part provided around the inner reinforcement part, and
the height of the rib of the inner reinforcement part from the bottom surface in the direction in which the shaft part extends is lower than the height of the rib of the outer reinforcement part.

5. The resin bracket according to claim 3 or 4, wherein
resin forming the bottom surface in the main body has a uniform thickness in the direction in which the shaft part extends.

6. The resin bracket according to any one of claims 1 to 5, wherein
the reinforcement part has a circular rib having a circular shape and surrounding the load-receiving member.

7. The resin bracket according to any one of claims 1 to 6, wherein
the reinforcement part has a radial rib radially extending from the load-receiving member.

8. The resin bracket according to claim 7, wherein
the reinforcement part further has a branch rib branched from the radial rib.

9. The resin bracket according to any one of claims 1 to 8, wherein
the resin constituting the main body contains 30% to 50% glass fiber.

10. The resin bracket according to any one of claims 1 to 9, wherein
the shaft part is provided with a screw part on a circumferential surface thereof.

11. The resin bracket according to any one of claims 1 to 10, wherein
the load-receiving member is mounted on a shock absorber of a cab suspension, and supports the shock absorber.
